Europäisches Patentamt

European Patent Office

Office européen des brevets

(11) Veröffentlichungsnummer: **0 476 267 A2**

## (12) EUROPÄISCHE PATENTANMELDUNG

(21) Anmeldenummer: **91112418.8**

(51) Int. Cl.5: **H04N 9/64**

(22) Anmeldetag: **24.07.91**

(30) Priorität: **21.09.90 DE 4029903**

(43) Veröffentlichungstag der Anmeldung:
**25.03.92 Patentblatt 92/13**

(84) Benannte Vertragsstaaten:
**AT DE FR GB IT**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**W-8510 Fürth/Bay.(DE)**

(72) Erfinder: **Nourbakhsh, Seyed-Hami, Grundig**
**E.M.V., Elektro-**
**Mech. Versuchsanstalt Max Grundig holländ**
**Stiftung**
**Kurgartenstrasse 37, W-8510 Fuerth(DE)**

(54) **Verfahren und Vorrichtung zur Erzeugung farbiger Maksen für die Überblendung von Videosignalen.**

(57) Bei bekannten Verfahren zur Ausblendung oder Begrenzung von Videosignalen werden Masken überblendet. Aufgabe der Erfindung ist es, ein einfaches Verfahren zur Überblendung mit farbigen Masken zur Verfügung zu stellen.

Zur Einfärbung der Masken wird das Farbhilfsträgersignal an den Stellen in das Videosignal überblendet, die das Luminanzsignal der Masken darstellen.

Das Verfahren ermöglicht die Überblendung von Videosignalen durch Masken mit einer beschränkten Farbauswahlmöglichkeit bei Geräten zur Videobildwiedergabe, die nach dem PAL-Verfahren arbeiten.

Fig.2

EP 0 476 267 A2

Die Erfindung geht aus von Verfahren zur Erzeugung von Masken für die Überblendung von Videosignalen.

Eine der Aufgaben von Fernsehbild-Mischeinrichtungen ist die Ausblendung oder Begrenzung der Bildinformation durch eine Maske. Diese Maske kann jede mögliche Gestalt haben oder auch eine sich vergrößernde geometrische Figur sein. Das zugehörige Steuersignal wird einem Trick- oder Effektgenerator oder einem ROM-Maskenspeicher entnommen. Eine bekannte Ausführung zeigt z. B. die DE-PS 36 22 058, welche die Vorgehensweise zur Begrenzung einer Videobildinformation mittels überblendeter Maske zeigt. Dabei wird in einem Bildverarbeitungsschaltkreis Bildinformation, die in Rahmenspeichern enthalten ist, mit einem Maskensignal, welches ein Maskensignalgenerator erzeugt, durch ein Gatter, das in Abhängigkeit vom Maskensiganl schaltet, zu einem Gesamtbild verknüpft, welches die Bildinformation mit einer schwarzen Begrenzungsmaske darstellt.

Als nachteilig wird dabei empfunden, daß die Einblendung der Maske nur in farblosen Grautönen erfolgt.

Dieser Nachteil wird von anderen bekannten Ausführungen von Fernsehbild-Mischeinrichtungen, z. B. beschrieben in der Zeitschrift IBE, November 1988, Seiten 37ff, durch die Verwendung von Farbgeneratoren zur Einfärbung des Maskensignals vermieden.

Ein weiteres Verfahren zur Erzeugung von Masken in Gestalt von farbigen Flächen für die Überlagerung von Videosignalen ist aus dem Aufsatz "Ein neuer Farbtrickgenerator für das Fernsehen", erschienen in Fernseh- und Kino-Technik, 1973, Nr. 5, bekannt. Es wird ein Verfahren vorgestellt, bei dem wahlweise mit Hilfe eines Maskengenerators Bildsignale und/oder Maskensignale zu einer Bildinformation zusammengesetzt werden. Zur Erzeugung der farbigen Flächen werden mittels einstellbarer Phasenschieber aus dem regenerierten Farbhilfsträgersignal zwei verschiedene Chrominanzsignale erzeugt, die von einem Schaltsignal, welches z.B. aus dem Bildsignal abgeleitet wird, geschaltet werden und zusammen mit dem Farbhilfsträgersignal zum Luminanzsignal des zu überlagernden Bildsignals addiert werden.

Der Erfindung liegt daher die Aufgabe zugrunde, ein Verfahren zur Erzeugung farbiger Masken nach dem Oberbegriff des Hauptanspruchs zu schaffen, das mit geringem Aufwand die Einfärbung der Masken, mit beschränkter Farbauswahl, ermöglicht.

Die Lösung dieser Aufgabe erfolgt durch die kennzeichnenden Merkmale des Hauptanspruchs. Die Nebenansprüche haben Vorrichtungen zur Druchführung des Verfahrens nach dem Hauptanspruch zum Inhalt.

Die Erfindung mit den kennzeichnenden Merkmalen des Hauptanspruchs hat den Vorteil, daß zur Erzeugung definiert farbiger Masken die in Empfangsgeräten und/oder Aufzeichnungsgeräten vorhandenen Schaltungsanordnungen ausgenutzt werden können und nur geringfügige Erweiterungen notwendig sind.

Die Erfindung wird anhand der in den Zeichnungen dargestellten Ausführungsformen nachfolgend näher erläutert.

Es zeigen:

Fig.1 ein Blockschaltbild zu einer ersten Ausführung des erfindungsgemäßen Verfahrens,

Fig.2 ein Blockschaltbild zu einer zweiten Ausführung des erfindungsgemäßen Verfahrens,

Fig.3 ein Ausführungsbeispiel für die Schalteinheit SE der zweiten Ausführungsform,

Fig.4 eine Modifikation der Schalteinheit SE der zweiten Ausführungsform, die eine Farbtonauswahl ermöglicht.

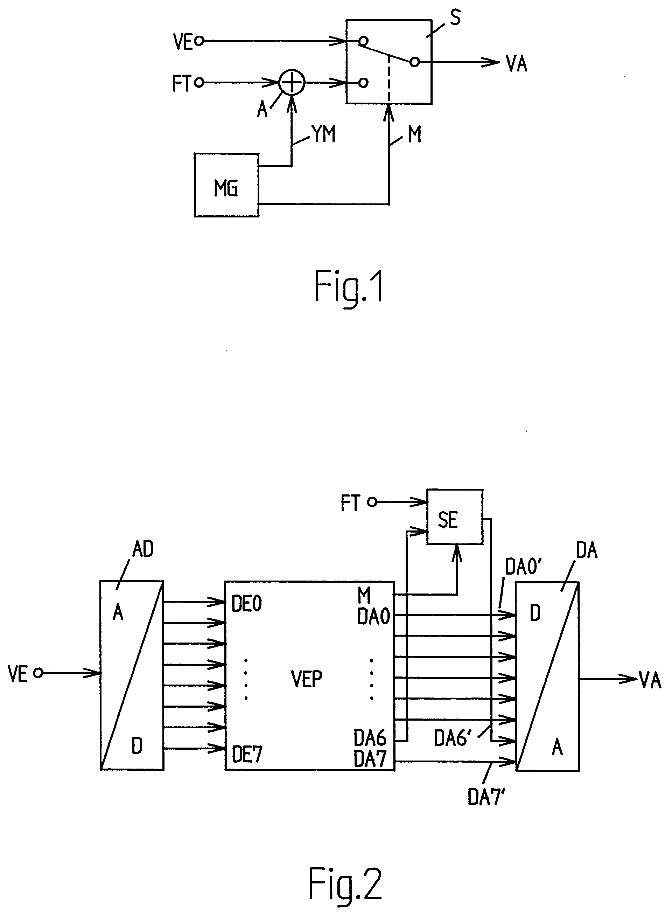

Das Blockschaltbild der ersten Ausführungsform gemäß Fig. 1 zeigt eine Vorrichtung für analoge Signalverarbeitung, welches durch das Überlagern des Maskenluminanzsignals YM mit dem Farbhilfsträgersignal FT farbige Masken erzeugt. Zur Einblendung der Maske in das zu überblendende Videosignal VE, das dem in PAL-Farbfernsehnorm kodierten FBA-Signal entspricht, wird der Schalter S vom Maskengenerator MG über das Steuersignal M betätigt. Am Ausgang VA des Schalters S steht dann nicht mehr das Videosignal VE an, sondern ein farbiges (blaues) Maskensignal, das im Addierer A aus dem Farbhilfsträgersignal FT und dem Graupegel des Maskenluminanzsignals YM, das vom Maskengenerator MG erzeugt ist, gebildet wird.

Der blaue Farbton entsteht, weil beim PAL-System bei der Demodulation des Farbartsignals dieses von Zeile zu Zeile als konjugiert komplexes Signal interpretiert wird. Da aber beim hier offenbarten Verfahren immer das Farbhilfsträgersignal FT ohne die zeilenweise Spiegelung an der (B-Y)-Achse dem Maskenluminanzsignal YM überlagert wird, ist sichergestellt, daß der bei der Demodulation resultierende Farbton immer der Phasenlage der (B-Y)-Achse und damit 0° entspricht, da eventuelle Phasenverschiebungen des Farbhilfsträgersignals FT durch die PAL-Demodulation ausgeglichen werden. Durch die Invertierung des Farbhilfsträgersignals FT, also durch eine Phasenverschiebung von 180°, läßt sich statt der blauen eine grüngelbe Maske erzeugen, da der resultierende Farbzeiger nun auf der -(B-Y)-Achse liegt. Für Phasenlagen des Farbhilfsträgersignals FT die im ersten oder vierten Quadranten des durch die (B-Y)-Achse und die (R-Y)-Achse aufgespannten Farbkoordinatensystems liegen, entsteht also ein blauer Farbton, für Phasenlagen im zweiten oder dritten Quadranten ein grüngelber. Wie beim üblichen Einsatz des PAL-Systems tritt beim Vorliegen von Phasenverschiebungen eine Entsättigung der Farbe ein, dies kann aber auch vorteilhaft genutzt werden, da durch die Vorgabe einer Phasenverschiebung die Farbsättigung des Blautons oder Grüngelbtons der Maske einstellbar ist. Die Farbsättigung läßt sich im übrigen natürlich auch direkt über die Amplitude des Farbhilfsträgersignals FT steuern. Das Farbhilfsträgersignals FT steht in üblichen Einrichtungen zur Verarbeitung von Videosignalen, welche nach dem PAL-System arbeiten, zur Verfügung. Der Maskengenerator MG arbeitet nach bekannten Verfahren.

Fig.2 ist das Blockschaltbild einer zweiten Ausführungsform. Die zweite Ausführungsform zeigt eine Vorrichtung zur Erzeugung farbiger Masken durch Überlagerung des Maskenluminanzsignals YM mit dem Farbhilfsträgersignal FT, wie es in bekannten digitalen Einrichtungen zur Verarbeitung von Videosignalen verwendet werden kann. Das analoge Videosignal VE wird im Analog-Digital-Wandler AD in ein digitales Signal DE0...DE7 umgewandelt und dem Videoeffektprozessor VEP zugeführt. In diesem Videoeffektprozessor VEP wird u.a. auch ein Maskensteuersignal M erzeugt, welches die Stellen des Videosignals kennzeichnet, die von einer Maske überblendet werden sollen.

Für diese Stellen ersetzt der Videoeffektprozessor VEP das digitalisierte Videosignal DE0...DE7 durch einen festen Wert (z.B. durch den dualen Wert 10010100), welcher die Helligkeit des Maskenluminanzsignals festlegt.

Aktiviert der Videoeffektprozessor VEP also das Maskensteuersignal M, so schaltet die Schalteinheit SE an den Ausgang DA6' das Farbhilfsträgersignal FT anstelle des digitalen Videosignals DA6, ein farbiges (blaues) Maskensignal wird erzeugt.

Dies wird durch die Modulation des digitalen Videosignals DA0'...DA7' mit dem Farbhilfsträgersignal FT erreicht.

Hat das digitale Videosignal DA0'...DA7' z.B. den dualen Wert 10010100, dies ist der Dezimalwert 148, entsprechend einem Signalanteil von 58%, und wird DA6' durch den Farbträger moduliert, so wechselt der Signalanteil zwischen 58 und 83% (11010100 dual gleich 212 dezimal, entspricht 83% Signalanteil).

Anschließend wird das digitale Signal DA0'...DA7' im Digital-Analog-Wandler DA zum analogen Signal VA rückgewandelt und steht zur Weiterverarbeitung zur Verfügung.

Durch die Verwendung eines anderen digitalen Videosignals als DA6, oder durch die Verwendung mehrerer Videosignale aus DA0...DA7, läßt sich die gewünschte Modulation einstellen.

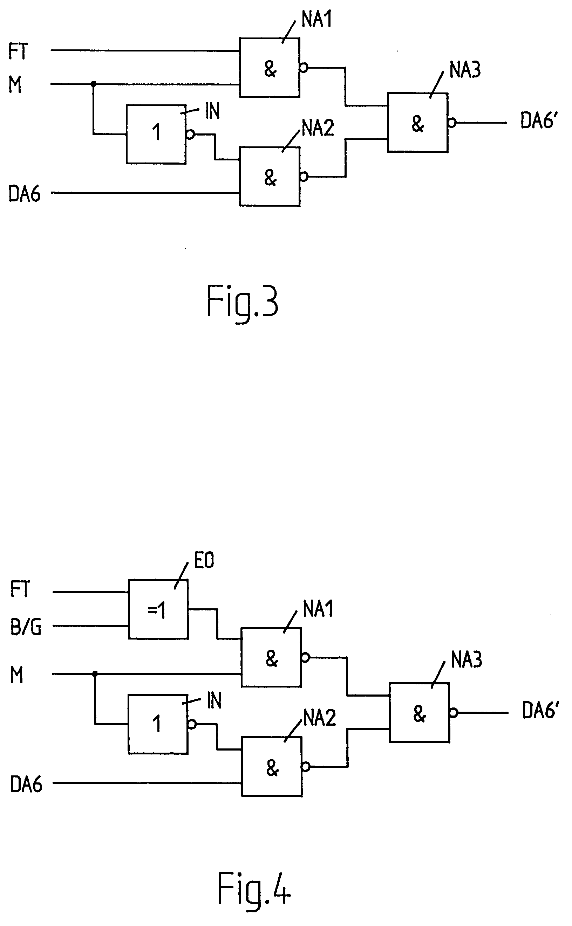

Fig.3 ist ein Ausführungsbeispiel für die Schalteinheit SE, die im normalen Betriebsfall das digitale Videosignal DA6 (Bildinhalt) über die NAND-Gatter NA2 und NA3 nach DA6' schaltet, wohingegen zur Erzeugung der farbigen Maske das Farbhilfsträgersignal FT über NA1 und NA3 nach DA6' geschaltet wird, wenn das Maskensignal M anliegt.

Fig.4 ist eine Modifikation der Fig.3, bei der zusätzlich ein EXOR-Gatter EO verwendet wird, um mit dem Signal B/G eine Farbwahlmöglichkeit zwischen blau und grüngelb zu ermöglichen.

Ist B/G nicht gesetzt, so wird der Farbträger FT unverändert an den Eingang von NA1 gelegt, die eingeblendete Maske erscheint blau, ist B/G jedoch gesetzt, so wird das Farbhilfsträgersignal FT invertiert, die Maske erscheint grüngelb, entsprechend einer Phasenlage von 180°.

## Patentansprüche

1. Verfahren zur Erzeugung von Masken in Gestalt von farbigen Flächen für die Überblendung von Videosignalen, die nach der PAL-Farbfernsehnorm kodiert sind und in einem Empfangsgerät und/oder Aufzeichnungsgerät verarbeitet werden, bei dem wahlweise mit Hilfe eines Maskengenerators Bildsignale und/oder Maskensignale zu einer Bildinformation zusammengesetzt werden,
   **dadurch gekennzeichnet,**
   daß zur Erzeugung der farbigen Masken das im Empfangsgerät und/oder Aufzeichnungsgerät regenerierte Farbhilfsträgersignal ohne PAL-Phasenumschaltung dem Maskensignal überlagert wird, wodurch, je nach Phasenlage des Farbhilfsträgersignal, eine Maske mit blauem oder grüngelbem Farbton entsteht.

2. Vorrichtung zur Durchführung des Verfahrens nach Anspruch 1, bei welcher die Überlagerung des Farbhilfsträgersignals (FT) in analoger Signalverarbeitungstechnik erfolgt,
   **dadurch gekennzeichnet,**
   daß das Farbhilfsträgersignal (FT) dem Luminanzsignal (YM) der Maske mittels einer Addierstufe (A) überlagert wird.

3. Vorrichtung zur Durchführung des Verfahrens nach Anspruch 1, bei welcher die Überlagerung des Farbhilfsträgersignals (FT) in digitaler Signalverarbeitungstechnik erfolgt,
   **dadurch gekennzeichnet,**
   daß das Farbhilfsträgersignal (FT) dem im Empfangsgerät und/oder Aufzeichnungsgerät digitalisierten Videosignal (DA0...DA7), dem durch einen dort vorhandenen Videoeffektprozessor (VEP) das Maskenluminanzsignal überlagert ist, in eine oder mehrere Datenleitungen des Videosignals(DAO...DA7) mittels eines vom Videoeffektprozessor (VEP) generierten Schaltsignals (M), das eine Schalteinheit (SE) betä-

tigt, eingeblendet wird.

Fig.1

Fig.2

Fig.3

Fig.4